# EUROPÄISCHE PATENTSCHRIFT

(11) **EP 1 003 380 B1**
(45) Veröffentlichungstag und Bekanntmachung des Hinweises auf die Patenterteilung: **09.04.2003**
(21) Anmeldenummer: 98941414.9
(22) Anmeldetag: 12.08.1998
(51) Int. Cl.: A23C 9/154, A23C 9/13, A23C 9/152

(54) **SAURES GETRÄNK**
ACIDIC DRINK
BOISSON ACIDE

(30) Priorität: 14.08.1997 DE 19735385
(43) Veröffentlichungstag der Anmeldung: 31.05.2000
(73) Patentinhaber: RUDOLF WILD GmbH & CO. KG, D-69214 Eppelheim (DE)
(72) Erfinder: SASS, Matthias, D-68723 Oftersheim (DE); RIMMLER, Susanne, D-68723 Plankstadt (DE)
(74) Vertreter: Grünecker, Kinkeldey, Stockmair & Schwanhäusser Anwaltssozietät
(86) Internationale Anmeldenummer: EP9805112
(87) Internationale Veröffentlichungsnummer: WO99008541

(56) Entgegenhaltungen:
- EP-A- 0 138 690
- EP-A- 0 385 051
- EP-A- 0 408 756
- EP-A- 0 449 354
- EP-A- 0 521 707
- EP-A- 0 765 609
- WO-A-96/29880
- DATABASE WPI Section Ch, Week 8021 Derwent Publications Ltd., London, GB; Class D13, AN 80-37457C XP002088011 & JP 55 050885 A (AJINOMOTO KK) , 14. April 1980
- PATENT ABSTRACTS OF JAPAN vol. 009, no. 125 (C-283), 30. Mai 1985 & JP 60 012930 A (SANEI KAGAKU KOGYO KK), 23. Januar 1985

## Beschreibung

Die vorliegende Erfindung betrifft ein saures Getränk mit verbesserter Langzeitstabilität, ein Verfahren zu dessen Herstellung sowie ein Kit, enthaltend die Grundbestandteile des Getränks.

Milchhaltige Getränke sind bereits seit langem bekannt. Schon 1905 wurde die Herstellung einer imprägnierten Magermilch ("Champagnermilch") beschrieben, die gesüßt und durch Zusatz von Aromen aromatisiert wurde. In Japan ist seit 1935 ein saures Milchgetränk auf dem Markt, welches unter Einsatz von Lactobacillus-Kulturen hergestellt wird. Dieses Getränk auf Basis von fermentierten Milchprodukten kann ebenfalls mit einer Vielzahl von Zusatzstoffen geschmacklich verfeinert werden.

Die US-A-5,260,085 beschreibt ein milchhaltiges Getränk, das Wasser, Milchfeststoffe, Geschmacksstoffe und ein 2-Komponenten-Stabilisatorsystem aus Monoglyceriden und Diglyceriden sowie Carrageenan und/oder Pektin enthält. Das Getränk enthält weiterhin ein Puffersystem aus Natriumphosphat und Kaliumhydroxid, um den pH-Wert zwischen 6,3 und 6,5 zu halten.

Die US-A-5,202,145 beschreibt ein Verfahren zur Herstellung eines milchhaltigen Getränks, bei dem eine homogenisierte Zusammensetzung aus Wasser, Milchfeststoffen und einem 2-Komponenten-Stabilisatorsystem mit einer wäßrigen, gepufferten und mit einem Geschmacksmittel versehenen Lösung gemischt und anschließend erhitzt wird. Das 2-Komponenten-Stabililsatorsystem enthält eine Mischung aus einer ersten Komponente, enthaltend Mono- und bis zu 10 Gew-% Diglyceride, sowie einer zweiten Komponente, enthaltend Carrageenan und/oder Pektin. Das Puffersystem besteht aus einer Mischung aus Natriumphosphat und Kaliumbicarbonat und besitzt einen pH-Wert von 6,8 bis 7,2. Durch das Erhitzen wird die gesamte Menge an Kaliumbicarbonat zu Kaliumhydroxid und Kohlendioxid umgesetzt, wobei der pH-Wert des Getränks auf 6,3 bis 6,5 gebracht wird. Die eingesetzten Milchfeststoffe haben einen Milchfettgehalt von mindestens 15 % und einen Milchproteingehalt von mindestens 25 %, bezogen auf das Gewicht des eingesetzten Milchfeststoffs. Der Gehalt an Milchfeststoffen im Getränk beträgt 1 Gew.-%.

Obwohl Milcheiweiß empfindlich gegenüber sauren Substanzen ist, was zu Koagulierung und Ausfällung in Gegenwart von säurehaltigen Substanzen, wie Fruchtsäften, führt, gibt es auch eine ganze Reihe milchhaltiger Getränke mit einem pH-Wert oberhalb von 3,0.

Die GB-A-1315718 beschreibt ein Verfahren zur Herstellung eines sauren Milchgetränks, bei dem eine entrahmte Milch enthaltende Mischung durch Zugabe geeigneter Säuren auf einen pH-Wert von 3,5 bis 3,7 gebracht wird. Das erhaltene Getränk hat eine weiße, milchartige Trübung.

Die US-A-4,194,019 beschreibt ein Verfahren zur Herstellung eines stabilisierten sauren milchhaltigen Getränks. Dabei wird zunächst entrahmte Milch durch Zugabe von Säure oder durch Fermentation auf einen pH-Wert von 3,35 bis 3,75 eingestellt. Anschließend wird die Mischung einer UHT-Behandlung bei 125°C bis 160°C für nicht länger als 10 Sekunden unterworfen.

Die EP-B-449354 (DE-B-69101166) beschreibt ein Verfahren zur Herstellung eines sauren, calciumangereicherten Getränks aus fermentierter Milch. Um Stabilitätsprobleme während der Pasteurisierung, vor der Abfüllung des fertigen Getränks, zu verhindern, wird die Konzentration der Trockenstoffe in der zu fermentierenden Milch erhöht. Weiterhin wird dem Getränk ein Stabilisator und eine geringe Menge eines Magnesiumsalzes zugesetzt.

Die bekannten milchhaltigen Getränke weisen einige Nachteile auf. Die milchhaltigen Getränke mit nahezu neutralem pH sind in ihrer Erscheinung und ihrem Geschmack sehr milchähnlich und weisen einen schweren, viskosen Charakter auf.

Insbesondere im Hinblick auf Geruch, Geschmack und Textur wird die milchähnliche Erscheinung dieser Getränke negativ bewertet. Damit fehlt der erfrischende, saure Charakter, der beispielsweise durch den Zusatz von Genußsäuren oder Kohlensäure erzielt werden kann. Häufig treten Getränkefehler in Form von Fettringen im Flaschenhals oder sehr festem Bodensatz auf.

Saure milchhaltige Getränke weisen, bedingt durch die verwendeten Rohstoffe, wie Joghurt oder sauergelegte Milch oder ihren hohen Milchanteil, einen schweren viskosen Charakter auf. Der Trinkgenuß ähnelt mehr der Einnahme einer kompletten Mahlzeit.

Durch die hohe Viskosität und die geringe Haltbarkeit, die darüberhinaus auch noch eine lückenlose Kühlkette erfordert, treten Getränkefehler wie Ringbildung seltener auf bzw. werden durch geeignete Verpackungen (undurchsichtige Becher) oder Verbrauchshinweise (vor Gebrauch gut schütteln) getarnt. Die beschriebenen Verfahren erlauben es darüber hinaus auch nicht, ein hochkonzentriertes Produkt zu erhalten. Dadurch wird es unmöglich, Herstellung und Abfüllung des Getränks räumlich weit voneinander zu trennen.

Aufgabe der vorliegenden Erfindung ist es, ein saures Getränk zur Verfügung zu stellen, das eine bessere Lagerbeständigkeit als die bekannten sauren Getränke aufweist, sowie ein Verfahren zu dessen Herstellung und ein Kit, enthaltend die Grundbestandteile des Getränkes, bereitzustellen.

Diese Aufgabe wird durch ein saures Getränk gelöst, das mindestens ein Fett, ein Hydrokolloid, ein Milchprotein und Calcium- und Magnesiumionen enthält, mit einem pH-Wert von 3,5 bis 4,5, dadurch gekennzeichnet, daß es

0,003 bis 3,8 g/l mindestens eines Fetts, 0,1 bis 10 g/l mindestens eines Milchproteins, 0,01 bis 10 g/l mindestens eines Hydrokolloids, 0,1 bis 1,2 g/l Calciumionen und 0,01 bis 0,7 g/l Magnesiumionen enthält, wobei das Getränk aus nicht fermentierten Rohstoffen hegerstellt ist und des Verhältnis zwischen Calcium- und magnesiumionen im Bereich von 40:60 bis 80:20 liegt.

Das erfindungsgemäße Getränk hat sehr gute sensorische Eigenschaften, vermittelt ein gutes Mundgefühl und hat einen erfrischenden Charakter.

Das im erfindungsgemäßen Getränk eingesetzte Fett kann aus beliebigen pflanzlichen, tierischen oder synthetischen Fetten bzw. Fettquellen und Mischungen daraus stammen.

Als Fettquelle wird bevorzugt Milch, üblicherweise Kuhmilch, mit einem Fettgehalt von 0,3 bis 4 % verwendet, wobei handelsübliche Milchsorten (mit Fettgehalten von 1,5 bis 3,9 %) aufgrund ihrer leichten Verfügbarkeit bevorzugt eingesetzt werden. Es können aber auch Milchkonzentrate oder aus Milchpulver rekonstituierte Milch verwendet werden. Pflanzliche oder tierische Fettquellen sind beispielsweise Sojaöl, Sonnenblumenöl, Rapsöl, Leinöl, Baumwollsaatöl oder Kokosfett bzw. Talg, Schmalz oder Butter.

Der Gesamtfettgehalt im Getränk beträgt üblicherweise 0,003 bis 3,8 g/l, bevorzugt 0,03 und 1,5 g/l und insbesondere bevorzugt 0,1 bis 0,5 g/l.

Das dem erfindungsgemäßen Getränk zugesetzte Milchprotein ist ein in der natürlichen Milch vorkommendes Protein oder eine Mischung daraus. Diese Milchproteine umfassen Eiweiße, wie Caseine, Molkenproteine, Minorkomponenten, wie Fettkügelchenmembranproteine oder Butyrophilin, oder Enzyme. Bevorzugt werden Molkenproteine, beispielsweise β-Lactoglobulin, α-Lactalbumin, Serumalbumin, Immunoglobuline oder prokose Peptone, eingesetzt. Als Molkenprotein ist α-Lactalbumin besonders bevorzugt.

Der Gesamtmilchproteingehalt des Getränkes liegt geeigneterweise bei 0,1 bis 10 g/l, vorzugsweise bei 0,3 bis 3 g/l, besonders bevorzugt bei 0,5 bis 1,5 g/l.

Enthält das Getränk Fett in Form von Milch bzw. Milchprodukten, so beträgt der Anteil an zugesetztem Milchprotein vorzugsweise mindestens 50 Gew.-% und insbesondere bevorzugt 60 bis 80 Gew.-%, bezogen auf die Gesamtmilchproteinmenge im Getränk.

Die bekannten fermentierten Getränke sind zwar einfacher herzustellen, weisen aber, durch die Aromabildung der verwendeten Bakterienkulturen ein typisches, häufig unerwünschtes Geschmacksbild auf.

Sauer-fermentierte Milchprodukte werden unter Verwendung von Bakterienkulturen hergestellt. Diese Bakterien (aus den Familien Streptococcus und Lactobacillus) vergären durch ihre Stoffwechseltätigkeit die Lactose der Milch zu Milchsäure. Dadurch sinkt der pH-Wert unter den isoelektrischen Punkt des Caseins von ca. 4,65. Es kommt zur Gerinnung der Eiweißstoffe und zum weiteren Abbau, teilweise bis zu den Aminosäuren. Daneben werden von den Bakterienkulturen Aromastoffe gebildet (Acetaldehyd, Acetoin, Diacetyl, Aceton), die den Geschmack der sauerfermentierten Produkte prägen (Dieter Osteroth (Hrsg.) Taschenbuch für Lebensmittelchemie und -technologen, Band 2, 1. Auflage, Springer Verlag, Berlin, Heidelberg, 1991).

Die Eigenschaften eines fermentierten Milchproduktes sind im Hinblick auf die Stabilität in einem sauren Getränk somit bevorzugt, da ein Teil der Proteinstruktur bereits verändert ist und somit in einem sauren Getränk keine Veränderung mehr erfährt. Sauermilchprodukte, z.B. Joghurt, eignen sich daher besonders gut zur Herstellung von Getränken. Allerdings wird damit auch die Sensorik maßgeblich mitgeprägt.

Das erfindungsgemäße Getränk enthält weiterhin ein oder mehrere Hydrokolloide. Hydrokolloide sind makromolekulare, hydrophile, wasserlösliche bzw. in Wasser quellende Stoffe, die ihrer chemischen Struktur nach überwiegend zu den Polysacchariden gehören. Dabei unterscheidet man zwischen natürlichen pflanzlichen Hydrokolloiden, die eventuell modifiziert sein können, mikrobiellen biosynthetischen Hydrokolloiden und synthetischen Hydrokolloiden (Lebensmittel-Lexikon, Täufel, Ternes, Tunger, Zobel, Behr's Verlag, Hamburg, 1993). Alle diese üblichen Hydrokolloide können in dem erfindungsgemäßen Getränk eingesetzt werden, wie Meeresalgenextrakte, z.B. Agar-Agar, Carragen, Alginsäure, Dulsan, Furcellaran, Eucheuman, Hypnean, Iridophycan, Porphyran, Phyllophoran, Gracelaria-Gummi oder Lichenin, Samenschleimstoffe, wie Johnannisbrotkernmehl, Guarkernmehl, Tarakernmehl, Guaran, Tamarindenschleim, Quittensamenschleim, Leinsamenschleim, Flohsamenschleim, Taragummi oder Okragummi, Pflanzenexsudate, wie Gummi arabicum, Gummi traganth oder Gum ghatti, Stärke, modifizierte Stärken, Cellulosederivate, mikrobielle Polysaccharide, wie Dextran, Xanthan, Gellan oder β-1,3-Glucane, oder synthetische Hydrokolloide, wie Polyvinylpyrrolidon, Polyvinylalkohol, Carboxylvinylpolymer, Ethylenoxidpolymere oder Acrylpolymere. Bevorzugt ist der Einsatz von Agar-Agar, Carrageen, Alginsäure und ihre Ester, Gummi arabicum, Johannisbrotkernmehl, Guaran, Leinsamenschleim, Dextrinen, sowie bestimmten Stärkederivaten und Carboxymethytcellulose. Insbesondere bevorzugt sind Alginsäure (E400) sowie die Alginate (E401, E402, E403, E404, E405), wie Propylenglycolalginat (E405). Bevorzugt werden jeweils hochveresterte Produkte eingesetzt. Der Veresterungsgrad des Hydrokolloids liegt vorzugsweise bei mindestens 50 %, besonders bevorzugt bei 75 bis 85 %.

Werden Mischungen mehrerer Hydrokolloide eingesetzt, so beträgt der Anteil der Alginate in dieser Mischung bevorzugt mehr als 50 Gew.-%, bezogen auf das Gesamtgewicht der Hydrokolloidmischung. Die Gesamtmenge an Hydrokolloiden liegt üblicherweise bei 0,01 bis 10 g/l, vorzugsweise bei 0,05 bis 1 g/l und besonders bevorzugt bei 0,3 bis 0,6 g/l.

Vorzugsweise beträgt das Verhältnis zwischen Gesamthydrokolloidmenge und Gesamtmilchproteinmenge 1:8 bis 1:1, besonders bevorzugt 1:3 bis 1:5.

Das Getränk enthält weiterhin Calciumionen, üblicherweise aus Calciumsalzen. Als Calciumquelle können Calciumsalze, wie Calciumgluconat, Calciumcitrat, Calciumlactat, Calciumascorbat, Calciummalat, Calciumglycerophosphat, Calciumcaseinat, Calciumhydroxid, Calciumcarbonat, Calciumchlorid und Calciumphosphat, verwendet werden.

Magnesiumionen werden dem Getränk üblicherweise in Form von Magnesiumsalzen, wie Magnesiumgluconat, Magnesiumcitrat, Magnesiumlactat, Magnesiumascorbat, Magnesiummalat, Magnesiumglycerophosphat, Magnesiumcaseinat, Magnesiumhydroxid, Magnesiumcarbonat, Magnesiumchlorid und Magnesiumphosphat, zugesetzt.

Von diesen Salzen sind Calcium- und Magnesiumlactat bevorzugt.

Geeigneterweise enthält das erfindungsgemäße Getränk 0,1 bis 1,2 g/l, vorzugsweise 0,2 bis 0,6 g/l, Calciumionen und 0,01 bis 0,7 g/l, vorzugsweise 0,1 bis 0,5 g/l, Magnesiumionen.

Das Verhältnis zwischen Calcium- und Magnesiumionen liegt im Bereich von 40:60 bis 80:20, insbesondere bevorzugt im Bereich von 50:50 bis 70:30.

Das erfindungsgemäße Getränk hat einen pH-Wert im Bereich von 3,5 bis 4,5, bevorzugt von weniger als 3,8. Der pH-Wert wird durch den Zusatz von Säuren eingestellt. Im allgemeinen sind dabei die im Lebensmittelbereich üblichen Genußsäuren sowie deren Salze und anorganischen Säuren verwendbar. Illustrative Beispiele von Genußsäuren sind Äpfel-, Wein-, Zitronen-, Bernstein-, China-, Fumar-, Milchund Ascorbinsäure. Typische Salze sind die Natrium- und Kaliumsalze dieser Säuren. Beispiele anorganischer Säuren sind Schwefel- (E513), Salz- (E507) und Orthophosphorsäure (E338). Bevorzugt werden Milchsäure, Zitronensäure, Weinsäure, Äpfelsäure, o-Phosphorsäure und Fumarsäure sowie deren Natrium- und Kaliumsalze eingesetzt.

Das Getränk kann darüber hinaus noch weitere übliche Zusätze enthalten, wie Antioxidantien, Süßungsmittel, Aromen, Fruchtsäfte oder Fruchtsaftkonzentrate.

Geeignete natürliche Antioxidantien sind Tocopherole, L-Ascorbinsäure, ihre Fettsäureester, wie L-Ascorbylpalmitat oder Ascorbylstearat, D-Ascorbinsäure und ihr Natriumsalz, Gallussäurealkylester, wie Propylgallat, Octylgallat oder Dodecylgallat, Nordihydroguajaretsäure, Flavonoide, wie Querektin, Quercitrin oder Rutin, Carnosol- und Carnolsäure. Geeignete synthetische Antioxidantien sind tert.-Butylhydroxyanisol, Di-tert.-Butylhydroxyanisol und tert.-Butylhydrochinon. Bevorzugt sind dabei L-Ascorbinsäure, D-Ascorbin-säure und Mischungen daraus.

Zum weiteren Verfeinern des Getränks können Süßungsmittel zugesetzt werden. Im allgemeinen können Zucker, Süßstoffe, Zuckeraustauschstoffe und Süßungsmittelzusammensetzungen sowie Mischungen daraus eingesetzt werden. Geeignete Süßstoffe sind Acesulfam-K, Aspartam, Cyclamat, Neohesperidindihydrochalcon und Saccharin. Pflanzliche Süßstoffe können ebenfalls verwendet werden, beispielsweise Glycyrrhicin, Hernandulcin, Moneflin, Phyllodulcin, Steviosid und Thaumatin. Bevorzugt sind dabei Saccharin, Cyclamat, Aspartam und Acesulfam-K.

Geeignete Zuckeraustauschstoffe sind Fructose und Zuckeralkohole, wie Isomatitol (E953), Lactitol (E966), Maltitol, Manitol (E421), Sorbitol (E420), Xylitol (E967) sowie Gemische daraus. Weiterhin können als Süßungsmittel Mischungen aus synthetischem Süßstoff und entaromatisierten oder nicht entaromatisierten konzentrierten Fruchtzubereitungen verwendet werden. Solche Süßungsmittelzusammensetzungen sind z.B. aus der DE-B-3741961 oder DE-B-3839869 bekannt.

Süßungsmittel können dem erfindungsgemäßen Getränk in einer solchen Menge zugegeben werden, daß die erhaltene Süßkraft äquivalent ist mit einem Zusatz von bis zu 150 g/l Saccharose, bevorzugt 70 bis 110 g/l Saccharose.

Weiterhin kann das erfindungsgemäße Getränk Aromen und/oder Fruchtsäfte oder Fruchtsaftkonzentrate enthalten. Geeignete Aromen sind natürliche, naturidentische oder synthetische Aromen. Fruchtsäfte bzw. Fruchtsaftkonzentrate, die verwendet werden können, sind solche auf Basis von Zitrusfrüchten, wie Orange, Zitrone, Grapefruit oder Mandarine, und anderen Früchten, wie Apfel, Birne, Aprikose oder Ananas, sowie Beerenobst, wie Stachelbeere, Johannisbeere, Weinbeere, Heidelbeere, Erdbeere, Himbeere, Brombeere oder Maulbeere.

Das erfindungsgemäße Getränk kann weiterhin Kohlensäure enthalten. Üblicherweise enthält das Getränk 3 bis 6 g/l CO₂.

Das Getränk kann in verschiedene Gebinde abgefüllt werden, wobei üblicherweise Glasflaschen mit Schraubverschluß, Glasflaschen mit Kronkorkenverschluß, Plastikflaschen mit Schraubverschluß und Dosen sowie Tetrapack-Verpackungen eingesetzt werden.

Zur Herstellung des erfindungsgemäßen Getränks können die Zutaten in den gewünschten Mischungsverhältnissen in üblicher Weise innig vermischt werden.

Das Getränk wird dann homogenisiert und pasteurisiert. Die Homogenisierung erfolgt bevorzugt mit Hilfe eines Hochdruckhomogenisators bei Drucken zwischen 10 und 100 MPa, bevorzugt zwischen 20 und 40 MPa. Die Pasteurisierung erfolgt üblicherweise bei Temperaturen über 80°C, vorzugsweise über 85°C, bei Heißhaltezeiten von mindestens 10 Sekunden.

Die vorliegende Erfindung stellt weiterhin ein Kit zur Verfügung, aus dem durch Zugabe von Wasser und gegebenenfalls weiteren Zusatzstoffen, wie oben ausgeführt, das fertige Getränk in einer üblichen Getränkefüllanlage hergestellt werden kann. Dieses Kit umfaßt ein Konzentrat (A), enthaltend mindestens ein Fett, ein Hydrokolloid, ein Milchprotein, eine Säure und Wasser, sowie ein Konzentrat (B), enthaltend mindestens ein Calcium- und ein Magnesiumsalz in wäßriger Lösung.

Das Konzentrat (A) wird, wie vorstehend für das erfindungsgemäße Getränk angegeben, homogenisiert und pasteurisiert. Dieses Konzentrat ist in physikalischer und mikrobiologischer Hinsicht lagerstabil. Es kann in konzentrierter Form transportiert und zur Herstellung des erfindungsgemäßen Getränks verwendet werden. Das Konzentrat (A) kann weiterhin ein oder mehrere Antioxidantien enthalten, die aus den vorstehenden Verbindungen gewählt werden.

Gegebenenfalls kann dem Konzentrat (B) eine Säure zugesetzt werden. Das Konzentrat (B) kann gegebenenfalls auch Süßungsmittel und Aromen, Fruchtsäfte oder Fruchtsaftkonzentrate enthalten. Diese Zusätze werden aus den vorstehenden, für das erfindungsgemäße Getränk genannten, Zusätzen gewählt.

Zur Herstellung eines Getränks werden die beiden Konzentrate zusammengegeben und mit Wasser vermischt. Die Dosierung der Konzentrate liegt üblicherweise bei 50 bis 150 kg pro 1000 I fertiges Getränk für das Konzentrat (A) und bei 10 bis 50 kg pro 1000 I fertiges Getränk für das Konzentrat (B). Während der Herstellung kann das Getränk weiterhin mit Kohlensäure versetzt werden.

Die vorliegende Erfindung wird durch die folgenden Beispiele und Versuche weiter erläutert.

### Langzeitstabilität:

Die folgende Versuchsreihe demonstriert die Stabilisierungswirkung der Calciumund Magnesiumsalze. Dazu wurden 8 saure, milchhaltige Getränke hergestellt, die nur in der Menge der eingesetzten Calcium- und Magnesiumsalze voneinander abwichen. Zur Bewertung der Getränke wurde nach einer Beobachtungszeit von mindestens 4 Wochen, in denen die in Glasflaschen abgefüllten Getränke erschütterungsfrei aufbewahrt worden waren, eine optischen Kontrolle durchgeführt. Dabei wurde die Bildung eines Ringes aus Fettbestandteilen am Hals der Flasche (Ringbildung), die Bildung eines Sediments am Flaschenboden (Bodensatz) und die Abnahme der Trübungsintensität, beginnend im Flaschenhals (Ausklärung), bewertet.

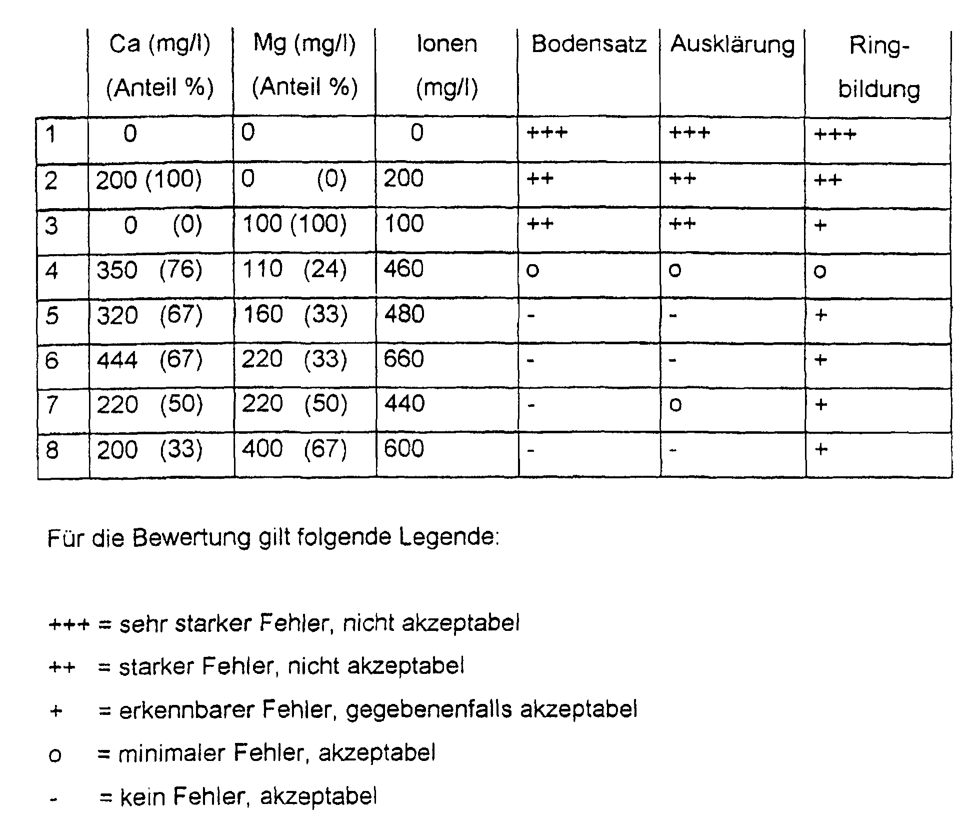

Die Versuchsreihe zeigt, daß durch den Zusatz von Calcium- und Magnesiumionen im erfindungsgemäßen Bereich die üblichen optisch sichtbaren Fehler, wie Sedimentbildung, Ringbildung und Ausklärung, vermieden werden.

### Beispiel 1:

### Herstellung eines Konzentrats (A)

(A1) 200 g Milch mit 3,5 % Fettgehalt werden mit 500 g Wasser verdünnt, mit 50 g Molkenproteinkonzentrat (70 %ig), 5,0 g Gummi arabicum sowie 5,0 g Propylenglycolalginat versetzt und mit 10,0 g Milchsäure angesäuert. Dann werden 3,0 g Ascorbinsäure zugesetzt und mit Wasser auf 1000 g aufgefüllt. Das Konzentrat wird auf 80°C erhitzt, bei 15 MPa homogenisiert und nach einer Haltezeit von einer Minute zurückgekühlt auf unter 25°C.
   Das so hergestellte Konzentrat weist einen Gesamtmilchproteingehalt von 41,8 g/kg, eine Gesamthydrokolloidmenge von 10 g/kg und einen Gesamtfettgehalt von 7 g/kg auf. Der pH-Wert dieses Konzentrats liegt unter 3,8.
(A2) 50 g Milch mit 1,5% Fettgehalt werden mit 500 g Wasser verdünnt, mit 50 g Molkenproteinkonzentrat (70%), 10 g Propylenglycolginat versetzt und mit 30 g Milchsäure angesäuert. Dann werden 2 g Ascorbinsäure zugesetzt und mit Wasser auf 1000 g aufgefüllt. Das Konzentrat wird auf 80°C erhitzt, bei 150 MPa homogenisiert und nach einer Haltezeit von einer Minute zurückgekühlt auf unter 25°C.
   Das so hergestellte Konzentrat weist einen Gesamtmilchproteingehalt von 36,7 g/kg, eine Gesamthydrokolloidmenge von 10 g/kg und einen Gesamtfettgehalt von 0,75 g/kg auf. Der pH-Wert dieses Konzentrats liegt unter 3,8.

### Herstellung eines Konzentrats (B)

(B1) 1,5 kg Äpfelsäure, 1,7 kg Calciumlactat-5-hydrat und 1,8 kg Magnesium- chlorid-6-hydrat werden mit Wasser vermischt und auf 20 kg aufgefüllt.
(B2) 0,85 kg Magnesiumhydroxicarbonat-4-hydrat werden in 3 kg Milchsäure und 10 kg heißem Wasser gelöst, mit 2,4 kg Calciumlactat-5-hydrat versetzt und mit Wasser auf 20 kg aufgefüllt.

### Herstellung eines Getränks aus Konzentrat (A) und (B):

50 g des Konzentrats (A1), wie oben beschrieben, und 20 g des Konzentrats (B1), wie oben beschrieben, werden mit 90 g Zucker versetzt und mit imprägniertem Wasser mit einem CO₂-Gehalt von ca. 5 g/l auf 1 l aufgefüllt. Das Getränk weist eine intensive, milchähnliche Trübung auf und besitzt einen pH-Wert von ca. 3,6.

100 g des Konzentrats (A2) und 20 g des Konzentrats (B2) werden mit 90 g Zucker und 1,5 g Zitronensäure-Monohydrat versetzt und mit imprägniertem Wasser mit einem CO₂-Gehalt von ca. 4 g/l auf 1l aufgefüllt. Das Getränk weist eine intensive milchähnliche Trübung auf und besitzt einen pH-Wert von ca. 3,6.

### Beispiel 2:

100 g Milch mit 1,5% Fettgehalt werden mit 700 g Wasser und 124 g Invertzuckersirup (72,7% Trockenwasser, 66% Invertierungsgrad) gemischt. Es werden 0,29 g Molkenproteinkonzentrat (70%ig), 0,3 Propylenglycolalginat und 1,5 g Natriumcitrat zugesetzt. Weiterhin werden 1 g Calciumchlorid-2-hydrat und 1 g Magnesiumchlorid-6-hydrat eingemischt und gelöst. Anschließend werden 70 g einer Fruchtsatzkonzentratmischung aus Orangen- und Karottensaft eingemischt und mit Wasser auf 1000 ml aufgefüllt.

Die Konzentratmischung (46,0° Brix, refr. 20°C, unkorr., Säuregehalt als Zitronensäure titriert bis pH 8,1; 6,8 g/100 g) ergibt einen Saftgehalt von 25% (20% Orangensaft, 5% Karottensaft).

Das Getränk wird bei 100 MPa homogenisiert und heiß (85°C) in Flaschen abgefüllt und anschließend rückgekühlt. Das so hergestellte Getränk weist einen Gesamtmilchproteingehalt von 3,6 g/l, eine Gesamthydrokolloidmenge von 0,3 g/l und einen Gesamtfettgehalt von 1,5 g/l auf. Das Getränk hat eine intensive pastellfarbigorange Trübung und weist einen pH-Wert von 3,7 auf.

## Patentansprüche

1. Saures Getränk, enthaltend mindestens ein Fett, ein Hydrokolloid, ein Milchprotein, Calciumionen und Magnesiumionen, mit einem pH-Wert von 3,5 bis 4,5, **dadurch gekennzeichnet, daß** es 0,003 bis 3,8 g/l Fett, 0,01 bis 10 g/l Hydrokolloid, 0,1 bis 10 g/l Milchprotein, 0,1 bis 1,2 g/l Calciumionen und 0,01 bis 0,7 g/l Magnesiumionen enthält, wobei das Getränk aus nicht fermentierten Rohstoffen hergestellt ist und das Verhältnis zwischen Calcium- und Magnesiumionen im Bereich von 40:60 bis 80:20 liegt.

2. Getränk nach Anspruch 1, **dadurch gekennzeichnet, daß** es weiterhin ein Antioxidans enthält.

3. Getränk nach mindestens einem der vorstehenden Ansprüche, **dadurch gekennzeichnet, daß** es weiterhin ein Süßungsmittel enthält.

4. Getränk nach mindestens einem der vorstehenden Ansprüche, **dadurch gekennzeichnet, daß** es weiterhin einen Aromastoff enthält.

5. Getränk nach mindestens einem der vorstehenden Ansprüche, **dadurch gekennzeichnet, daß** es weiterhin einen Fruchtsaft oder ein Fruchtsaftkonzentrat enthält.

6. Getränk nach mindestens einem der vorstehenden Ansprüche, **dadurch gekennzeichnet, daß** es mit Kohlensäure versetzt ist.

7. Getränk nach mindestens einem der vorstehenden Ansprüche, **dadurch gekennzeichnet, daß** das Hydrokolloid ein Alginat ist.

8. Getränk nach mindestens einem der vorstehenden Ansprüche, **dadurch gekennzeichnet, daß** es mindestens eine Säure zur Einstellung des pH-Werts enthält.

9. Verfahren zur Herstellung des Getränkes nach einem der Ansprüche 1 bis 8 **dadurch gekennzeichnet, daß** mindestens ein Fett, ein Milchprotein, ein Hydrokolloid, Calcium- und Magnesiumionen mit Wasser gemischt werden, der pH-Wert der Mischung auf 3,5 bis 4,5 eingestellt wird und die Mischung anschließend homogenisiert und pasteurisiert wird.

10. Kit zur Herstellung des Getränkes nach einem der Ansprüche 1 bis 8, umfassend:
- ein Konzentrat (A), enthaltend mindestens ein Fett, ein Hydrokolloid, ein Milchprotein, eine Säure und Wasser;
- ein Konzentrat (B), enthaltend mindestens ein Calcium- und ein Magnesiumsalz in wäßriger Lösung.

11. Kit nach Anspruch 10, **dadurch gekennzeichnet, daß** das Konzentrat (B) weiterhin eine Säure enthält.

12. Verfahren zur Herstellung des sauren Getränkes nach einem der Ansprüche 1 bis 8, **dadurch gekennzeichnet, daß** die Konzentrate (A) und (B) des Kits nach Anspruch 10 oder 11 unter Wasserzugabe vermischt werden.

13. Verfahren nach einem der Ansprüche 9 oder 12, **dadurch gekennzeichnet, daß** das Getränk mit Kohlensäure versetzt wird.

14. Verwendung des Kits nach einem der Ansprüche 10 oder 11 zur Herstellung eines Getränkes.

## Claims

1. Acid beverage containing at least one fat, one hydrocolloid, one milk protein, calcium ions and magnesium ions, at a pH of 3.5 to 4.5, **characterized in that** it contains 0.003 to 3.8 g/l fat, 0.01 to 10 g/l hydrocolloid, 0.1 to 10 g/l milk protein, 0.1 to 1.2 g/l calcium ions and 0.01 to 0.7 g/l magnesium ions, the beverage being produced from non-fermented raw materials and the ratio between calcium and magnesium ions being in the range of 40:60 to 80:20.

2. Beverage according to claim 1, **characterized in that** it further contains an antioxidant.

3. Beverage according to at least one of the preceding claims, **characterized in that** it further contains a sweetening agent.

4. Beverage according to at least one of the preceding claims, **characterized in that** it further contains a flavoring substance.

5. Beverage according to at least one of the preceding claims, **characterized in that** it further contains a fruit juice or a fruit juice concentrate.

6. Beverage according to at least one of the preceding claims, **characterized in that** it has added thereto carbon dioxide.

7. Beverage according to at least one of the preceding claims, **characterized in that** the hydrocolloid is an alginate.

8. Beverage according to at least one of the preceding claims, **characterized in that** it contains at least one acid for adjusting the pH.

9. Method for producing the beverage according to any one of claims 1 to 8, **characterized in that** at least one fat, one milk protein, one hydrocolloid, calcium and magnesium ions are mixed with water, the pH of the mixture is set to 3.5 to 4.5 and the mixture is subsequently homogenized and pasteurized.

10. Kit for producing the beverage according to any one of claims 1 to 8, comprising:
- a concentrate (A) containing at least one fat, one hydrocolloid, one milk protein, one acid and water;
- a concentrate (B) containing at least one calcium salt and one magnesium salt in an aqueous solution.

11. Kit according to claim 10, **characterized in that** concentrate (B) further contains an acid.

12. Method for producing the acid beverage according to any one of claims 1 to 8, **characterized in that** concentrates (A) and (B) of the kit according to claim 10 or 11 are mixed under addition of water.

13. Method according to any one of claims 9 or 12, **characterized in that** the beverage has added thereto carbon dioxide.

14. Use of the kit according to any one of claims 10 or 11 for producing a beverage.

## Revendications

1. Boisson acide, contenant au moins une matière grasse, un hydrocolloide, une protéine de lait, des ions calcium et des ions magnésium, d'un pH d'une valeur de 3,5 à 4,5, **caractérisée en ce qu'**elle contient 0,003 à 3,8 g/l de matière grasse, 0,01 à 10 g/l d'hydrocolloïdes, 0,1 à 10 g/l de protéines de lait, 0,1 à 1,2 g/l d'ions calcium et 0,01 à 0,7 g/l d'ions magnésium, la boisson étant fabriquée à partir de matières premières non fermentées et le rapport entre les ions calcium et magnésium se situant dans un intervalle de 40:60 jusqu'à 80:20.

2. Boisson selon la revendication 1, **caractérisée en ce qu'**elle contient en outre un antioxydant.

3. Boisson selon au moins l'une quelconque des revendications précédentes, **caractérisée en ce qu'**elle contient en outre un édulcorant.

4. Boisson selon au moins l'une quelconque des revendications précédentes, **caractérisée en ce qu'**elle contient en outre une substance aromatique.

5. Boisson selon au moins l'une quelconque des revendications précédentes, **caractérisée en ce qu'**elle contient en outre un jus de fruit ou un concentré de jus de fruit.

6. Boisson selon au moins l'une quelconque des revendications précédentes, **caractérisée en ce qu'**on lui mélange du gaz carbonique.

7. Boisson selon au moins l'une quelconque des revendications précédentes, **caractérisée en ce que** l'hydrocolloïde est un alginate.

8. Boisson selon au moins l'une quelconque des revendications précédentes, **caractérisée en ce qu'**elle contient au moins un acide pour l'ajustement du pH.

9. Procédé pour la fabrication de la boisson selon l'une quelconque des revendications 1 à 8, **caractérisé en ce qu'**au moins une matière grasse, une protéine de lait, un hydrocolloïde, des ions calcium et des ions magnésium sont mélangés à de l'eau, le pH du mélange est ajusté de 3,5 jusqu'à 4,5 et le mélange est ensuite homogénéisé et pasteurisé.

10. Kit pour la fabrication de la boisson selon l'une quelconque des revendications 1 à 8, comprenant :
- un concentré (A), contenant au moins une matière grasse, un hydrocolloide, une protéine de lait, un acide et de l'eau ;
- un concentré (B), contenant au moins un sel de calcium et de magnésium dans une solution aqueuse.

11. Kit selon la revendication 10, **caractérisé en ce que** le concentré (B) contient en outre un acide.

12. Procédé pour la fabrication de la boisson acide selon l'une quelconque des revendications 1 à 8, **caractérisé en ce que** les concentrés (A) et (B) du kit selon la revendication 10 ou 11 sont mélangés sous adjonction d'eau.

13. Procédé selon l'une quelconque des revendications 9 ou 12, **caractérisé en ce qu'**on ajoute du gaz carbonique à la boisson.

14. Utilisation du kit selon l'une quelconque des revendications 10 ou 11 pour la fabrication d'une boisson.
